# EUROPEAN PATENT APPLICATION

(11) **EP 0 792 732 A1**
(43) Date of publication of application: **03.09.1997**
(21) Application number: 96103176.2
(22) Date of filing: 01.03.1996
(51) Int. Cl.: B29C 44/56, E04B 1/76

(54) **Softening a rigid open-cell PU foam to make insulation slabs between rafters**

(71) Applicant: Dow Deutschland Inc., 77836 Rheinmünster (DE)
(72) Inventor: Diehl, Hermann August, 68307 Mannheim (DE); Stahler, Laurence, 1260 Nyon (CH)
(74) Representative: Huber, Bernhard, Dipl.-Chem.

(57) **Abstract**

For improving the elasticity of a body made of open-cell rigid/semi-rigid polyurethane foam (1) in at least one direction in space said body is subjected to a compression treatment in said direction. A slab stock elastified by compression treatment is advantageously used in construction applications such as in-between rafters insulation of roofs.

## Description

The present invention relates to processes for modifying the elasticity of bodies made of open-cell polyurethane (PU) foam, thus modified bodies and the use thereof, in particular, in the construction of buildings.

Insulating materials are utilized for a plurality of applications in the industrial and private field. Among those, thermal and sound insulation are of particular importance, in particular, in construction applications as well as generally the absorption of shocks and impacts, respectively. Typical examples of insulating materials are mineral fibers such as glass fibers or rock wool or synthetic materials such as plastic foams, said insulating materials being selected in dependence of the intended application according to their properties such as compressibility, rigidity, heat insulation factor, flexibility etc.

A major use of insulating material in the construction field is the thermal insulation of roofs. Such thermal insulation is particularly often accomplished by means of an insulation inbetween rafters, whereby insulating material is installed between the rafters of a roof and subsequently at the interior, a lining such as boards or panels is provided. In the private field inbetween rafters insulation is installed mostly by the house owners themselves, i.e. unskilled workers in a do-it-yourself procedure. In the past decades there have been utilized primarily mineral fiber insulating materials for this purpose. However, in the recent past said mineral fiber insulating materials have been subject to criticism, since airborne fine particles which arise during the installation are believed to be a health hazard for the installer.

An alternative to mineral fibers is the use of rigid plastic foams such as, for example, foams made of expanded polystyrene (EPS) or extruded polystyrene (XPS), respectively. However, since in practice the spacing between rafters varies considerably and the fitting in of slabs made of rigid foam is rather difficult and, furthermore, an installation without exactly fitting in said slabs results in the presence of thermal bridges, this insulation method has not gained much importance.

In order to compensate for these disadvantages with regard to poor dimensional adaptability there are sold slabs made e.g. of EPS rigid foams that have been mechanically treated, i.e. grooved, which provides for a certain degree of flexibility and adaptability to the spacing in-between rafters. However, these products still are not satisfactory for the user.

Furthermore, it is known in the state of the art to decrease the dynamic stiffness of polystyrene foam to a degree such that thus elastified foams may be used for impact sound insulation. Suitable processes for said treatments comprise, in particular, a post-swelling treatment as well as fulling or pressing which gives satisfactory results for PS-slabs of typically up to about 25 mm.

A further alternative is the use of closed-cell PU flexible foams as insulating material. However, a disadvantage of these materials is, when having a rather high apparent density, their tendency to buckling when being compressed between the rafters, whereas they are not self-supporting when having a lower apparent density. Furthermore, the PU flexible foams having the apparent density required in practice are rather expensive and thus not competitive to conventional insulating materials.

With regard to the example referred to above, i.e. insulation inbetween rafters, it would thus be advantageous to have available an improved material having e.g. improved elasticity at competitive costs. It would be advantageous, in particular, to have available a body such as an insulating slab whose elasticity could be modified in different directions in space essentially according to given requirements. With respect to insulation inbetween rafters high compressibility or elasticity, respectively, in one direction in space will provide for sufficient adaptability to the varying spacing between rafters while rigidity of the slab in a second direction in space will eliminate buckling.

Thus, the problem underlying the present invention was to provide for an insulating material and, in particular, a rigid/semi-rigid foam whose elastic properties may be adapted to given requirements.

According to the present invention this problem is solved by a process for improving the elasticity of a body made of open-cell PU rigid foam or semi-rigid foam in at least one direction in space which is characterized in that the body made of PU foam is subjected to a compression treatment in said at least one direction in space.

Surprisingly, one succeeds by means of said compression treatment to improve the elastic properties of the open-cell PU foam in spite of its particular cell type, cell shape and cellular structure. Due to the mechanically induced structural modification of the cellular structure dimensional adaptation appropriate for the intended application can be achieved essentially without affecting other mechanical properties of said foam.

The definitions of "rigid foam" and "semi-rigid foam", as used therein, essentially correspond to DIN 7726. Accordingly, a rigid foam is foam having a relatively high deformation resistance upon compressive stress (Compressive Load Deflection, CLD, at 10% compression according to DIN 53421 ≥ 80 kPa) and a semi-rigid foam is a foam having an intermediate deformation resistance upon compressive stress (CLD at 10% according to DIN 53421 in the range of from 15 kPa to 80 kPa). Furthermore, even less rigid foams having a CLD at 10% as low as ≥ 8 kPa have been found to be suitable in the present invention. Thus, it is intended that, for the purposes of this specification, the definition of semi-rigid foams additionally comprises foams having a CLD at 10% compression in the range of from 8-15 kPa.

By "open-cell" it is understood in the art that a respective foam will comprise more than about 50% open cells. Preferably the open cell content exceeds 80% and more preferred exceeds 90%. Typically the open cell content will be in a range of > 95%. Foams intended for treatments according to the invention thus comprise PU foams having an open cell content at least 50% and an intermediate to high deformation resistance, corresponding to a CLD at 10% compression of ≥ 8 kPa.

Due to the compression treatment the microscopical scaffold of open-cell PU foam will be crushed, i.e. partially deformed or bended in a hinge-like fashion while a certain amount of cells and/or cell walls will remain undamaged. After the load has been removed the foam will recover to a certain extent whereby the recovery depends on various parameters such as load applied, the compression period, the formulation of the foam etc.

Accordingly, the compression treatment results in an improvement of elasticity, i.e. an elastification essentially in the direction of space in which the load or force, respectively, has been applied. If an improved elastic property of the foamed body in at least one further direction of space is intended, the compression treatment will be applied in the corresponding direction(s).

According to the invention the compression treatment will be accomplished after the foaming process in the course of production or preferably after a certain curing time. The force to be applied depends on the formulation of the foam, the apparent density, the deformation resistance/compressive strain, the intended application and the direction in which it is applied (e.g. parallel or perpendicular to rise).

According to one embodiment of the invention the compression treatment comprises applying a compressive force homogeneously to essentially the entire surface area being present in at least one direction in space or, respectively, perpendicular to one axis of a body. Suitable means for subjecting a foamed body such as slab made of rigid PU foam to such homogeneous compression treatment are, e.g., conventional presses using plates for a batchwise procedure. Suitable means for a continuous procedure are, e.g., a pair of cylinders or rolls positioned in close spacing between which slab made of rigid foam will be passed through.

According to another embodiment the compression treatment comprises applying a compressive force selectively. By "selectively" it is understood that a partial surface of the body will be subjected to the compression treatment, i.e. only one or several surface regions will be compressed by using suitable dyes and/or rolls.

It should be acknowledged that the process according to the invention provides for further variations and combinations. For example, by application of a procedure using a pair of cylinders as described above there may be produced a body of rigid foam having a modified, i.e. improved elasticity in direction of the compressive force applied. Concurrently or subsequently to this first compression treatment there may be carried out further compression treatments in at least one further direction in space, whereby bodies having accordingly modified elastic properties in multiple directions in space become available. It is also possible to carry out the compression treatment in a "step by step" mode. By "step by step" mode it is understood that subsequent to a first compression treatment the body is subjected to at least one further compression treatment in the same direction in space as the first treatment. Thereby the compression in a subsequent treatment will be more intensive than in a preceding treatment. Applying the compression in such step by step mode may have operational advantages as well as influence product properties. The said step by step compression can be accomplished by passing a body such as an insulating slab between a first pair of rolls and subsequently between at least one further pair of rolls, whereby the spacing of the rolls and thus the opening (gap) is gradually decreased.

The force to be applied in the compression treatment generally depends on the nature of the body to be treated, i.e. the formulation of the foam, the apparent density, the deformation resistance and the intended application or the desired properties, respectively. For typical foams/suitable formulations the crushing treatment is conducted by compressing a foam sample to a minimum of 50% of its initial height, e.g. 1-50%, preferred 5-30% of its initial height. The compressive force is maintained for a sufficient period of time to achieve the desired result. Treatment periods, however, do not seem to be critical and in general it is sufficient to pass the body between two rolls at a speed of 0.5-10 m/min, preferred 1-5 m/min.

The foamed bodies modified by means of the inventive process are made of PU foam that initially is rigid and only slightly deformable or flexible. Suitable formulations for producing such rigid/semi-rigid foams comprise:
- a polyol or blend of polyols having an average functionality between 2.0 and 4.0 and preferably between 2.5 and 3.5 and an average molecular weight between 800 and 6,000 and preferably between 1,000 and 3,000,
- water between 10 and 50 pphp (parts per hundred parts of polyol), preferred between 10 and 25 pphp,
- halogenated phosphate esters, flame retardants 0-100 pphp,
- solid flame retardants 0 - 50 pphp,
- silicone surfactants 0.5 - 5.0 pphp, preferred 0.5 - 2.0 pphp,
- amine catalyst 0 to 2 pphp, preferred 0.5 - 1.5 pphp,
- polymethylene polyphenylisocyanate with a total NCO content of from 25% to 35% 100-150 pphp, preferred 110 - 140 pphp.

A specific example found to be suitable in the present invention and indicating specified chemical substances is (in pphp):

| | |
|---|---|
| - polyether polyol Voranol CP 1000 polyol (MW = 1000, functionality = 3) | 100 |
| - water | 15 |
| - halogenated phosphate esters flame retardant (modified tris(1.3,dichloropropylphosphate) | 45 |
| - silicone surfactant (polydimethylsiloxane copolymer) | 1.5 |

| - amine catalyst | |
|---|---|
| dimethylaminopropylamine | 0.3 |
| pentamethyldiethylenetriamine | 0.3 |
| - polymethylene polyphenylisocyanate (NCO = 31%) | 130 |
| - melamine (solid flame retardant) | 25 |

According to another aspect, the present invention relates to a body made of open-cell PU rigid foam/semi-rigid foam having improved elasticity that is available by the process according to the invention. By the term "improved elasticity" it is understood in this specification that elastic properties of the compression treated PU foam is increased in at least one direction in space as compared to the identical but non-treated PU foam. In terms of hardness the improved elasticity may be expressed as a CLD at 40% compression (according to norm ISO 3386.1 for flexible foam) of from 1 to 5 kPa.

Preferably, the elasticity of a body treated according to the present invention is anisotropic, i.e. it has different values in different directions in space. According to the invention the modification of the elasticity of a PU foam is achieved by crushing, i.e. the compression induced modification of the cellular structure. The structural modification comprises, in particular, to damage and/or deform cellular walls. Accordingly, it is assumed that the elasticity will be improved essentially in the direction of compression, whereas in other directions in space a minor difference will be observed.

Material which has been manufactured from formulations as indicated above and subsequently crushed according to the inventive process is typically characterized by physical parameters within the following ranges:

| | |
|---|---|
| - density (kg/m³) | 8-20 |
| - airflow (cfm) | higher than 0.8 |
| - flow resistivity (Ns/m⁴) | 10⁴ to 10⁵ |
| - porosity, h(-) | 0.9 - 0.95 |
| - modulus of Young E (Pa) | 10⁴ to 10⁶ |

The shape and dimension of the body depend only on the intended application. However, the body will usually have a rather simple shape such as slab or a block, since when using such simple shape, the process according to the invention may be accomplished without the requirement of specifically adapted compression devices. With respect to different embodiments and/or particular applications, respectively, the body to be treated according to the inventive process may, however, have a specifically adapted and generally more complicated shape. The dimensional decrease occurring or being expected, respectively, due to the compression treatment should in general be taken into account in the initial design of said body.

The major use of materials treated according to the process of the present invention naturally relates to the field of insulation. The principle advantage as compared to materials known from the state of the art relies in that there may be utilized materials having high rigidity or stiffness, respectively, whereby at the same time defined elastic properties in desired regions and/or directions can be utilized.

An important range of applications thus relates to situations where insulating materials such as, e.g. prefabricated slabs of insulating rigid foam, have to be fitted into given structures. When using conventional slabs made of rigid foam the required tailoring consumes time and manpower and thus adds to installation costs. In contrast thereto insulating slabs treated according to the invention have sufficient elasticity to be fitted in given structures by compression.

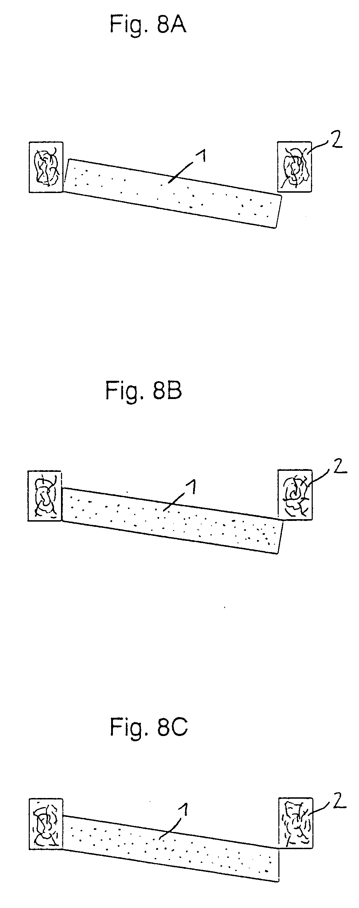

One example of the application of slab foam treated according to the invention is the insulation of pitched roofs in-between rafters. The invention allows for simple installation which may as well be accomplished by unskilled workers and, furthermore, allows for the elimination of thermal bridges that practically cannot be avoided when having to cut slab material made of rigid foam to size. In a preferred embodiment at least one side of the body facing a rafter is cut slant with regard to the body's height (cf. Fig. 8) in order to facilitate installation.

A further application example are framework walls such as encountered in lumber house construction. By a framework wall there is understood a wall consisting of a supporting structure filled with insulating material and an appropriate lining of its surfaces.

A further essential advantage of the insulating material treated according to the present invention as compared to conventional slabs made of rigid foam is that the transmission of sound waves is considerably reduced (particularly perpendicular to the direction of compression). The absorption coefficient of the crushed material as measured in a Kundt's tube test typically is in the range of from 0.4 - 0.5 (at a frequency of 500 Hz) and 0.8 - 0.95 (at a frequency of 1000 Hz), respectively. Thus, an additional application relates to sound absorption, wherein, in particular, the lining of ceilings and walls and the utilization in the framework walls mentioned above is intended. In a similar manner materials treated according to the present invention may be used in floors for impact sound absorption.

Furthermore, bodies having been treated according to the inventive process are well suitable for a plurality of applications also besides the field of construction. In this respect, in particular, the absorption of kinetic energy such as, e.g. impact energy, has to be noted.

According to a still further aspect, the present invention relates to a roof system comprising at least the components rafters, an insulation in-between rafters and a weather-proof exterior construction and which is characterized in that the insulation inbetween rafters consists of the open-cell PU rigid/semi-rigid foam having improved elasticity according to the invention. Preferably, the roof system comprises additionally a lining or boarding at the interior such as, e.g. gypsum plaster boards. Of particular advantage is the use of a combination of insulating materials, whereby in addition to the insulation in-between rafters with the elastified PU foam according to the invention, a secondary insulation layer may be used mounted on top of the rafters and comprising self-supporting slabs made of rigid plastic foam (e.g. XPS). Such a combination comprising, e.g. an in-between rafter insulation made of PU foam and having thickness of about 12 cm and an insulation layer made of PS rigid foam on top of the rafters and having thickness of about 5-6 cm, is particularly advantageous with regard to building physics and vapor diffusion, since the load-bearing construction (rafters) is thermally protected (summer/winter) and there will not be condensing water resulting in damaging the wood. The design of the weather-proof exterior construction will be described in more detail in the following in connection with the enclosed figures.

According to a still further aspect, the present invention relates to a wall comprising a supporting structure, insulating material and an exterior lining which is characterized by the fact that the insulation consists of open-cell PU rigid/semi-rigid foam having improved elasticity.

The invention is further illustrated by means of the enclosed figures, wherein
- Fig.1: shows schematically one embodiment for putting into practice the process according to the present invention,
- Fig.2: shows a further embodiment for putting into practice the process of the present invention,
- Fig.3: shows schematically a device for a continuous compression treatment to be applied in a step-by-step mode and
- Figs.4-7: show various embodiments of the roof system according to the invention and wherein similar components are identified by the same reference numbers and
- Fig.8: shows various geometric configurations of slabs for roof insulation viewed along the direction of the rafters.

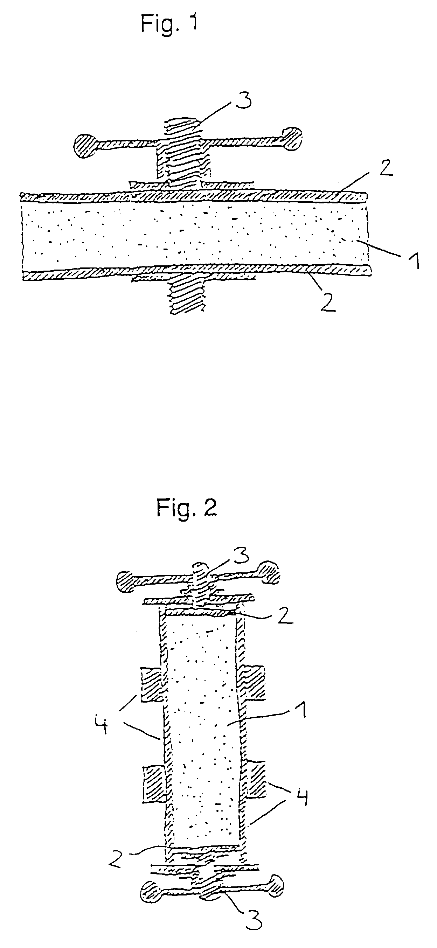

Fig.1 shows schematically a plate press suitable for carrying out the process of the invention. In Fig.1 there is shown a body of insulating material (1) such as a slab located between two parallel plates (2). For putting into practice the process according to the invention there is exerted an adjustable compressive force acting essentially on the entire surface of the slab by means of the screw press (generally referred to as "3").

Fig.2 shows a similar embodiment, wherein a slab (1) is located between two different panels (4), whereby, optionally, a compressive force may be exerted to the slab in perpendicular to the plane of panels (4). In a direction of space perpendicular to panels (4) there is exerted a compressive force to the slab by means of press plates (2) and screw presses (3).

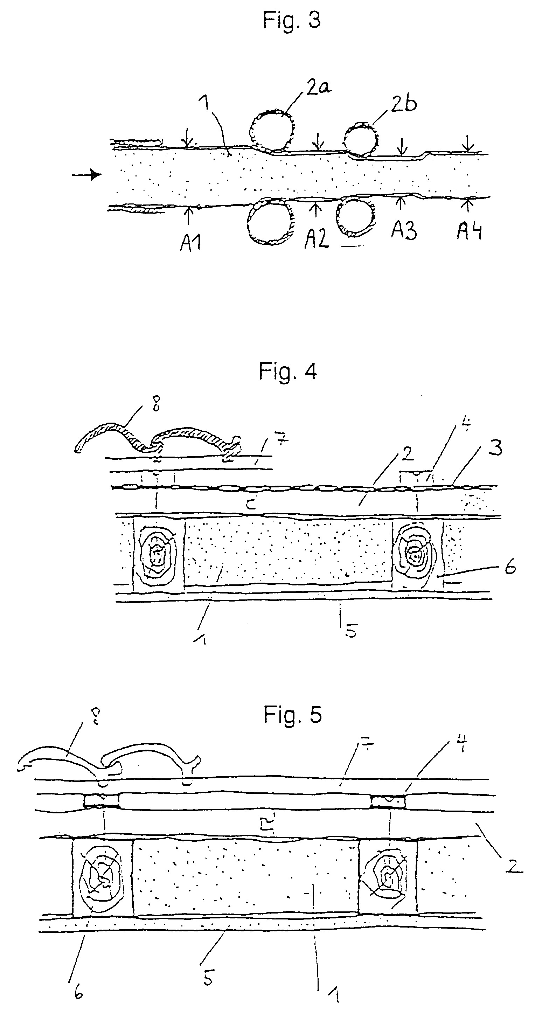

Fig.3 shows schematically an embodiment for a continuous compression treatment in a step-by-step mode. For that purpose slab made of open-cell PU foam (1) is conducted in direction of the arrow between a first pair of rolls (2a) and subsequently between a second pair of rolls (2b). By the action of the rolls the slab (1) is gradually compressed from an initial dimension A1 to a dimension A2 and subsequently to A3. Due to incomplete recovery of the compressed foam the final dimension obtained will be A4. The dimensional decrease is in percent: (A1-A4) x 100 : A1.

It should be noted that the embodiments of Figs.1-3 are only given to illustrate the invention. Different embodiments, in particular, the use of different devices to exert the pressure and embodiments, wherein the pressure is not exerted from both sides but from one side only contra a solid counter-support etc., are within the scope of the present invention.

Fig.4 shows preferred embodiments of the roof system according to the invention. This embodiment comprises rafters (6) in essentially parallel arrangement, whereby the in-between rafters insulation made of PU rigid foam (1) treated according to the invention is fitted in-between the rafters by compression as required. At the interior side there is provided lining such as, e.g. gypsum plaster board (5). On top of the rafters there is provided a layer of secondary insulation made of rigid plastic foam such as XPS (2). The weather-proof exterior construction consists of lay-on sheet (3) made of optionally vapor-permeable plastic and providing for protection against wind and humidity and the actual exterior construction formed by battens (4), tiling battens (7) and roof tiles (8).

Fig.5 shows a similar embodiment as of Fig. 4, wherein the lay-on sheet made of plastic (3) has been omitted. Optionally, a protective action against humidity from the outside may be achieved by specific joint sealing in the insulation layer (2) on top of the rafters in order to drain off water.

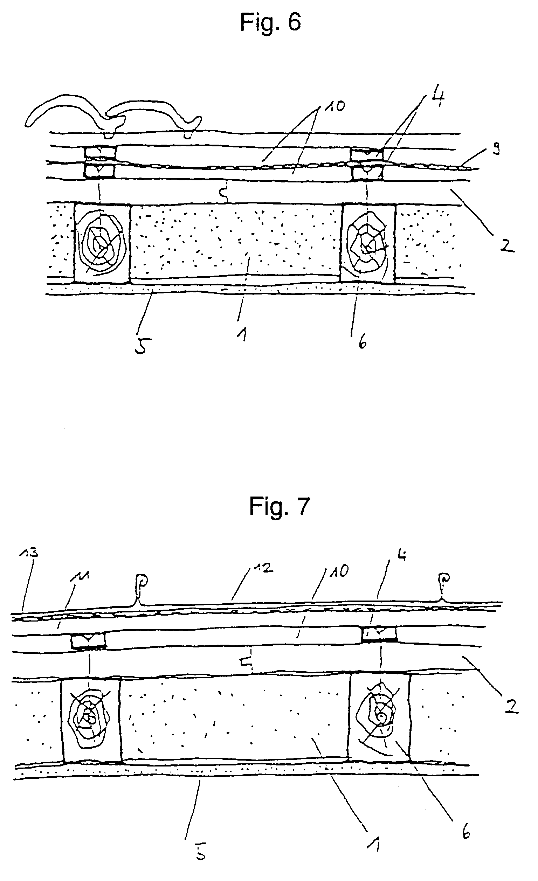

Fig.6 shows a similar roof system using an intermediate layer (9), thereby producing a ventilated rear space (10).

Fig.7 shows a roof construction, wherein the weather proof of the construction consists of boarding (11), pre-roofing made of bitumen (12) and metal sheet roofing (13) instead of tiling battens (7) and roof tiles (8).

Fig.8 shows schematically different configurations of slab material (1) suitable for installation between rafters (2), viewed along the direction of the rafters. Fig.8A shows a conventional cut slab having front, back and side faces at right angles. When being fitted in between the rafters, the initial contact between slab and rafter is limited to one (left, lower) edge. Since during installation pressure is exerted on the slab, exact positioning may become difficult. As shown in Fig.8B, a body having one side along its height cut slant allows for easier positioning, since a contact surface between slab and rafter is provided (at the left side). Fig.8C shows a further embodiment wherein the body has two slant cut sides, which results in an essentially paralleloid geometry. By means of this configuration the slab is easily positioned and the force required for compression during installation is minimized as well.

## Claims

1. Process for improving the elasticity of a body made of open-cell PU rigid foam or semi-rigid foam having a Compression Load Deflection at 10% compression of ≥ 8 kPa in at least one direction in space,
**characterized in that**
said body made of PU foam is subjected to a compression treatment in said at least one direction in space.

2. Process according to claim 1,
**characterized in that**
the compression treatment comprises applying a compressive force homogeneously to at least one surface of said body.

3. Process according to claim 1,
**characterized in that**
the compression treatment comprises applying a compressive force selectively to at least one partial surface of said body.

4. Process according to one of claims 1 to 3,
**characterized in that**
said body is subjected to at least one further compression treatment in the same direction in space as the first treatment.

5. Process according to any of the preceding claims,
**characterized in that**
during the compression treatment said body is compressed to 1 to 50% of its initial height.

6. Process according to claim 5,
**characterized in that**
during the compression treatment said body is compressed to 5 to 30% of its initial height.

7. Process according to any of the preceding claims,
**characterized in that**
the body has been produced from a formulation comprising
- a polyol or blend of polyols having an average functionality between 2.0 and 4.0 and an average molecular weight between 800 and 6,000,
- water between 10 and 50 pphp (parts per hundred parts of polyol)
- halogenated phosphate esters, flame retardants 0-100 pphp,
- solid flame retardants 0 - 50 pphp,
- silicone surfactants 0.5 - 5.0 pphp,
- amine catalyst 0 - 2 pphp,
- polymethylene polyphenylisocyanate with a total NCO content of from 25% to 35% 100 - 150 pphp.

8. Body made of open-cell PU rigid/semi-rigid foam having improved elasticity obtainable by a process according to one of claims 1-7.

9. Body according to claim 8,
**characterized in that**
it has an apparent density of from 8-20 kg/m³.

10. Body according to claim 8 or 9,
**characterized in tha**t
it has a Compression Load Deflection at 40% compression in the range of from 1 to 5 kPa.

11. Body according to one of claims 8-10,
**characterized in tha**t
the elasticity is anisotropic.

12. Use of a body made of open-cell PU rigid/semi-rigid foam having improved elasticity according to one of claims 8 to 11 as insulating material.

13. Use of a body made of open-cell PU rigid/semi-rigid foam having improved elasticity according to one of claims 8 to 11 for facilitating the dimensional adaptation to given dimensions.

14. Use according to claim 12 or 13 for the insulation in-between rafters in roof constructions.

15. Use according to claim 14,
**characterized in that**
at least one side of said body facing a rafter is cut slant along the body's height.

16. Use according to claim 12 or 13 for sound absorption in/at ceilings and walls.

17. Use according to claim 12 or 13 for impact sound insulation in floors.

18. Use according to claim 12 or 13 for the absorption of shock or impact.

19. Roof system comprising
- rafters
- an insulation in-between rafters and
- a weather-proof exterior construction,
**characterized in that**
the insulation in-between rafters consists of open-cell PU rigid/semi-rigid foam having improved elasticity according to one of claims 8 to 11.

20. Roof system according to claim 19,
**characterized in that**
it comprises an interior lining.

21. Roof system according to claim 19 or 20,
**characterized in that**
it comprises an insulation layer on top of the rafters.

22. Wall comprising
- a supporting construction
- filling material and
- a lining,
**characterized in that**
the filling material consists of open-cell PU rigid/semi-rigid foam having improved elasticity according to one of claims 8 to 11.
